# EUROPÄISCHE PATENTSCHRIFT

(11) **EP 2 471 015 B1**
(45) Veröffentlichungstag und Bekanntmachung des Hinweises auf die Patenterteilung: **28.09.2022**
(21) Anmeldenummer: 10765360.2
(22) Anmeldetag: 27.08.2010
(51) Int. Cl.: G06Q 10/06, G06Q 50/04, G06F 30/13, G06F 111/20, G06F 119/18

(54) **VERFAHREN ZUR OPTIMIERTEN HERSTELLUNG VON LEUCHTEN, ENTSPRECHENDE LEUCHTEN SOWIE EIN DAFÜR AUSGEBILDETER RECHNER UND EIN DATENTRÄGER MIT EINEM COMPUTERPROGRAMMPRODUKT ZUM HERSTELLEN DER LEUCHTEN**
METHOD FOR THE OPTIMIZED PRODUCTION OF LIGHTS, CORRESPONDING LIGHTS, COMPUTER DESIGNED THEREFOR, AND DATA BEARING DEVICE COMPRISING A COMPUTER PROGRAM PRODUCT FOR PRODUCING THE LIGHTS
PROCÉDÉ PERMETTANT D'OPTIMISER LA FABRICATION DE LUMINAIRES, LUMINAIRES CORRESPONDANTS, ORDINATEUR CONÇU À CET EFFET ET SUPPORT DE DONNÉES DOTÉ D'UN PRODUIT-PROGRAMME INFORMATIQUE PERMETTANT LA FABRICATION DE LUMINAIRES

(30) Priorität: 27.08.2009 DE 102009038729
(43) Veröffentlichungstag der Anmeldung: 04.07.2012
(73) Patentinhaber: Fraunhofer-Gesellschaft zur Förderung der angewandten Forschung e.V., 80686 München (DE)
(72) Erfinder: DE BOER, Jan, 70374 Stuttgart (DE); BACHMANN, Lars, 73230 Kircheim unter Teck (DE)
(86) Internationale Anmeldenummer: PCT/EP2010/005286
(87) Internationale Veröffentlichungsnummer: WO 2011/023404

(56) Entgegenhaltungen:
- EP-A2- 1 033 525
- US-B1- 6 484 169
- M. Sebborn: "Customising of a two-dimensional CAD system to service the needs of a small high technology company", COMPUTER-AIDED ENGINEERING JOURNAL, vol. 6, no. 1, 1 January 1989 (1989-01-01) , page 13, XP055351375, GB ISSN: 0263-9327, DOI: 10.1049/cae.1989.0004
- Optical Research Associates: "LightTools, Optical Engineering Software", , 26 March 2010 (2010-03-26), pages 1-8, XP055352359, Retrieved from the Internet: URL:www.opticalres.com/lt/ltpodds_features .html [retrieved on 2017-03-07]

## Beschreibung

### Technisches Gebiet

Die vorliegende Erfindung betrifft ein Verfahren zur optimierten Herstellung von Leuchten. Dabei geht es insbesondere um eine verbesserte Herstellung individueller Leuchten.

### Stand der Technik

Bei der professionellen Planung von Gebäuden spielen die Lichtplanung und Beleuchtungstechnik eine erhebliche Rolle. Im Hinblick auf einen nachhaltigen Ressourcen- und Energieeinsatz und auf steigende Anforderungen der Benutzer von Gebäuden hinsichtlich einer behaglichen und funktionalen Beleuchtung werden die Lichtplanung und Beleuchtungstechnik weiter an Bedeutung gewinnen. Hinzu kommt, dass sich speziell durch die LED-Technologie eine Vielzahl weiterer technischer und gestalterischer Varianten bei der Planung von Beleuchtungsanlagen eröffnet.

Nach dem derzeitigen Stand der Technik werden zur Deckung der planerischen Anforderungen an eine Beleuchtungsaufgabe Serienleuchten in vielen Fällen aus elektronischen Herstellerkatalogen zumeist mit Hilfe von Lichtplanungsprogrammen ausgewählt und eingesetzt. Kommt es zu keiner Deckung der planerischen Anforderungen mit einzelnen Serienleuchten (oder einer geschickten Kombination von Serienprodukten wie Strahlern auf einem Stromschienensystem) werden bis dato Sonderleuchten anforderungsspezifisch in vielen Fällen von Leuchtenherstellern für Lichtplaner oder Endabnehmer entwickelt und konstruiert.

Damit wird in Abhängigkeit von den lichttechnischen Anforderungen und den architektonischen, gestalterischen Wünschen eine Leuchte entwickelt. Steht die Konstruktion fest, so gilt es im Handel nach verfügbaren Komponenten für die Leuchte zu suchen. Kann die Leuchte nicht mit verfügbaren Komponenten verwirklicht werden, so ist eine zumeist aufwendige Einzelfertigung der nicht verfügbaren Komponenten erforderlich. In vielen Fällen wird man dabei versuchen, diese Komponenten mit einer rechnergestützt betriebenen Vorrichtung herstellen zu können. Hierzu ist es erforderlich zuvor einen Datensatz zur Herstellung der nicht verfügbaren Komponenten des Leuchtensystems zu erzeugen. Diese unter dem Stichwort computer aided manufacturing (CAM) bekannte Vorgehensweise eignet sich zwar primär für größere Stückzahlen; sie kann jedoch in vielen Fällen auch bei Einzelfertigungen zu einer wirtschaftlicheren Produktion gegenüber einer rein manuellen Einzelfertigung beitragen. Gegenüber einer Serienfertigung oder einer Fertigung einer Leuchte aus ausschließlich bereits verfügbaren Komponenten ist der Aufwand jedoch im Allgemeinen erheblich höher.

Häufig wird der Lichtplaner jedoch auch Anforderungen stellen, welche Komponenten erforderlich machen, die nicht oder nur mit erhöhtem Aufwand mit einer rechnergestützt betriebenen Vorrichtung erzeugt werden können. Dies erfordert eine manuelle Einzelanfertigung, welche mit hohen Kosten verbunden ist.

Auf der Seite www.fluid-forms.com kann der Kunde internetbasiert eine vorgegebene Wohnzimmerleuchte verändern. Damit kann eine vermutlich automatisierte Produktion nicht verfügbarer Komponenten einer Leuchte, hier des Lampenschirms einer Wohnzimmerleuchte, bewirkt werden. Dabei wird nur auf die Gestaltung der Leuchte selbst abgestellt. Lichttechnische Anforderungen spielen keine Rolle.

Im Prospekt zur Software "LightTools" von Optical Research Associates wird eine Software beschrieben, mit deren Hilfe Beleuchtungssysteme entwickelt werden können. Dabei sind Schnittstellen mit Programmen vorgesehen, welche die automatisierte Herstellung von Komponenten von Leuchten betreffen. Auf diese Weise kann allem Anschein nach sichergestellt werden, dass am Markt nicht verfügbare Komponenten von Leuchten automatisiert hergestellt werden können. Die Software weist auch Optimierungsmodule auf, welche die Entwicklungsarbeiten für Leuchten oder Leuchtensysteme automatisieren sollen. Zur Bedienung dieser Software scheint hohe lichttechnische und konstruktive Kompetenz des Anwenders erforderlich zu sein.

Aus der Veröffentlichung "Das internationale Software-Paket zur Reflektor-Entwicklung" von Karl Happe, online seit 12.06.04 unter http://www.reflector-optic.de/Reflektorberechnung.pdf wird eine computergestützte Entwicklung von Reflektoren für Leuchten beschrieben.

Im Artikel "Rapid Manufacturing for Mass Custumisation" IPROMS 2009 Virtual Conference, 06-17. Juli 2009 von D. Eyers und K. Dotchev wird eine automatisierte Herstellung von Leuchten, bei denen der Kunde den Lampenschirm individuell bestimmen kann, beschrieben.

Im Artikel " A Web-Based Fuzyy Mass Customization System" von Y, H. Chen, Y. Z. Wang und M. H. Wong, erschienen in "Journal of Manufacturing Systems", Vol. 20, Nummer 4, 2001, Seiten 280 bis 287 wird die webbasierte automatisierte Herstellung von verschiedenen Gegenständen beschrieben.

In DE 11 2007 002 554 T5 wird ein Verfahren zur automatischen kundenspezifischen Angebotserstellung für die Herstellung eines Teils beschrieben. Dabei werden anhand der CAD-Datei für das herzustellende Teil, wobei die CAD-Datei ein Teileoberflächenprofil definiert, die kostenbeeinflussenden CNC-Bearbeitungsparameter des Teileoberflächenprofils beurteilt. Dem Kunden werden wählbare Werte für einen kostenbeeinflussenden Herstellungsparameter, der nicht mit dem Teileoberflächenprofil zusammenhängt, angezeigt. Der Kunde kann einen der angezeigten Werte auswählen. Auf der Basis der kostenbeeinflussenden CNC-Bearbeitungsparameter des Teileoberflächenprofils und der vom Kunden gewählten Werte wird automatisch ein Angebot erstellt und zum Kunden geschickt.

Aus der DE 20 2004 011 816 U1 ist bekannt, dass Möbel auf der Basis von individuellen Kundenanforderungen hin automatisch gefertigt werden können.

Aus dem Artikel "Customising of a two-dimensional CAD system to service the needs of a small high technology Company" von M. Sebborn, Computer-Aided Engineering Journal, Bd. 6, Nr. 1, Februar 1989, Seite 13 bis 15, ISSN: 0263-9327, DOI: 1049/cae. 1989.0004 ist bekannt, dass eine Leuchte durch einen interaktiven Prozess gestaltet werden kann. Dazu wird unter Berücksichtigen der verschiedenen Parameter nach den Anforderungen nahekommenden Standardleuchten gesucht. Der Nutzer kann dann aus einer Liste von Leuchten eine aussuchen. Sollte keine Leuchte verfügbar sein, kann eine neue produziert werden.

### Beschreibung

Der vorliegenden Erfindung liegt daher die Aufgabe zugrunde, die Nachteile des Standes der Technik zu überwinden und ein Verfahren und eine Vorrichtung anzugeben, mit der eine einfache Produktion nicht verfügbarer Komponenten, auch nicht verfügbarer Einzelkomponenten, möglich ist. Diese Aufgabe wird durch die unabhängigen Ansprüche gelöst. Die abhängigen Ansprüche geben vorteilhafte Weiterbildungen an.

Erfindungsgemäß wurde erkannt, dass ein Verfahren zur Herstellung einer Leuchte bereit zu stellen ist, welches die nachfolgenden Schritte aufweist. Zunächst sind durch einen Benutzer, in der Regel wird es sich um den Lichtplaner, meist um einen Architekten, handeln, die lichttechnischen, statischen und elektrischen Anforderungen sowie mindestens eine Anforderung aus geometrischen und gestalterischen Anforderungen an eine Leuchte festzulegen. Hierbei wird es sich in der Regel um die zu erzielende Lichtwirkung und die erforderliche Lichttechnik handeln. Ausgehend von diesen Anforderungen gilt es mit Hilfe eines Rechners eine Leuchte zu ermitteln. Dabei werden in einer, in vielen Fällen auch in mehreren Datenbanken, abgelegte Daten von Komponenten von Leuchten benutzt. In manchen Fällen mag sich dabei herausstellen, dass ausschließlich verfügbare Komponenten verwendet werden können. In vielen Fällen werden jedoch die am Markt verfügbaren Komponenten zur Verwirklichung einer die Anforderung erfüllenden Leuchte nicht ausreichen, so dass es gilt, nicht verfügbare Komponenten herzustellen. Während üblicherweise allenfalls berücksichtigt wird, ob die nicht verfügbaren Komponenten überhaupt herstellbar sind, also etwa dass keine verwinkelte Bohrung vorgesehen ist, soll vorliegend sichergestellt werden, dass ein Datensatz erstellbar sein muss, mit dem mindestens eine Vorrichtung zur Herstellung der nicht verfügbaren Komponenten der Leuchte gesteuert werden kann. Damit wird sichergestellt, dass nicht verfügbare Komponenten von Leuchten automatisiert hergestellt werden können. Auch wenn in manchen Fällen einzelne Schritte bei der Herstellung der Komponenten nicht automatisierbar sein sollten, ist ein Datensatz, mit dem eine Vorrichtung zur Herstellung der nicht verfügbaren Komponenten gesteuert werden kann, ein wichtiger Schritt zur Automatisierung und damit zur Reduktion des Herstellungsaufwands. So würde etwa die automatische Bereitstellung von Bohrungen eine Reduktion des Herstellungsaufwands bewirken, auch wenn die Montage der Leuchtmittel manuell erfolgen müsste. Dies gestattet auf individuelle Bedürfnisse und Wünsche abgestimmte Leuchten Ressourcen schonend, ohne den in vielen Fällen erforderlichen Prototypenbau, zu einem vernünftigen Preis bereitzustellen.

Dabei ist zu betonen, dass es sich hierbei nicht um eine rein organisatorische Maßnahme handelt. Vielmehr gilt es die technischen Überlegungen zur Herstellung der nicht verfügbaren Komponenten mit den technischen Überlegungen zur Bestimmung einer Leuchte zu verknüpfen. Ohne dieses Ineinandergreifen der technischen Überlegungen wäre dies nicht möglich. Der Vollständigkeit halber sei angemerkt, dass es theoretisch auch möglich sein könnte, dass alle Komponenten, mit einer oder mehreren rechnergestützt betriebenen Vorrichtung individuell herzustellen sind.

Die Erfindung zeichnet sich dadurch aus, dass dem Benutzer der Aufwand zur Bereitstellung und Herstellung der Leuchte angegeben wird. Ganz wesentlich ist dabei der Vorteil, dass anhand des ermittelten Herstellungsaufwands es möglich wird, dem Benutzer einen Preis anzugeben, so dass unmittelbar entschieden werden kann, ob die Leuchte ausgewählt werden soll und ein Hersteller beauftragt werden kann. Auch wenn es sich bei letzterem um eine organisatorische Frage handelt, so ist Basis dafür die technische Überlegung der Ermittlung und Anzeige des Herstellungsaufwands. Damit wird es in der Praxis möglich, dass Architekten Leuchten auswählen können, die nicht verfügbare Komponenten aufweisen, ohne dass umständliche Abstimmungen erforderlich sind, zu welchem Preis dies möglich ist. Dabei ist die Ermittlung des Herstellungsaufwands nicht auf die nicht verfügbaren Komponenten zu beschränken, wenngleich es sich dabei im Regelfall um den aufwändigsten Teil handelt. Hinzu kommt auch der Herstellungsaufwand für die verfügbaren Komponenten. Dies kann etwa die Angabe sein, wie viele bekannte Leuchtmittel welcher Art erforderlich sind. Der Herstellungsaufwand der einzelnen verfügbaren Komponenten kann freilich einer Datenbank entnommen werden. Schließlich kann hierbei auch unmittelbar auf die nichttechnische Größe Preis zurückgegriffen werden. Dies setzt allerdings die vorhergehende technische Überlegung voraus, welche und wie viel verfügbare Komponenten erforderlich sind.

Um Missverständnisse zu vermeiden ist klarzustellen, dass unter nicht verfügbaren Komponenten im Gegensatz zu verfügbaren Komponenten, solche Komponenten zu verstehen sind, die nicht als fertige Komponenten im Handel erhältlich sind.

Zu den Komponenten, aus denen eine Leuchte allgemein aufgebaut ist, zählen allgemein die Leuchtmittel, also die Lampen, elektrische Zuleitungen, Fassungen für die Leuchtmittel, Komponenten zur Lichtverteilung wie Reflektoren, Einhausungen wie Gehäuse, in spezieller Ausbildung auch Decken- und Bodeneinbausätze und elektrische Betriebsgeräte. Eine individuelle Fertigung etwa der Leuchtmittel scheint eher aufwändig. Bei den rein mechanischen Komponenten hingegen ist eine individuelle Herstellung gut möglich.

Die Vorrichtung, die zur Herstellung nicht verfügbarer Komponenten mit dem erstellbaren Datensatz gesteuert werden kann, kann beispielsweise eine rechnergesteuerte Fräsmaschine, rechnergesteuerte Bohrmaschine oder eine sonstige rechnergesteuerte Maschine sein. In vielen Fällen wird es sich um eine Kombination mehrerer Geräte handeln.

Es ist auch möglich, dass zum Festlegen der Anforderungen an die Leuchte Vorgaben des zu beleuchtenden Bereichs durch den Benutzer festgelegt werden. Im Idealfall sollte also genügen, dass der Benutzer Angaben macht, wie der zu beleuchtende Bereich geometrisch aussieht und welche Materialeigenschaften seine Oberflächen haben. Die Details der Leuchte ergeben sich rechnerisch aus den Angaben über den zu beleuchtenden Bereich.

Der Benutzer kann dabei die Möglichkeit erhalten, Veränderungen der Anforderungen vorzunehmen. Dies ist etwa von Vorteil, wenn durch eine geringe Veränderung der Anforderungen eine deutlich einfacher herstellbare Leuchte bestimmt werden kann. Damit kann gegebenenfalls eine Anpassung der Anforderungen an die Leuchte erfolgen, um einen unakzeptabel hohen Herstellungsaufwand zu vermeiden. Umgekehrt kann auch entschieden werden, dass ein sich in Grenzen haltender zusätzlicher Herstellungsaufwand zur Erfüllung gewisser Anforderungen und Wünsche akzeptiert wird. In besonderer Weise ist eine Veränderung der Anforderung durch den Benutzer sinnvoll, wenn zur Erfüllung der ursprünglichen Anforderungen kein Datensatz zur Herstellung nicht verfügbarer Komponenten erstellt werden kann

Um dem Benutzer, also in der Regel dem Lichtplaner, eine Auswahl zu ermöglichen, wird in einer Weiterentwicklung der Erfindung eine Mehrzahl möglicher Leuchen ermittelt. Dann kann vom Benutzer diejenige Leuchte ausgewählt werden, welche am Besten geeignet erscheint.

Eine besonders effiziente, Rechenzeit sparende und gute Ergebnisse liefernde Ermittlung der Leuchte kann erreicht werden, wenn in einem Rechenprogramm und/oder einer Datenbank abgelegte technische Konstruktionsprinzipien und/oder technische Spezifikationen einsetzbarer Komponenten genutzt werden können.

Eine wichtige Rolle bei der Leuchtenplanung spielen die geometrischen und gestalterischen Wünsche und Anforderungen an die Leuchte und/oder deren Einhausung. Daher ist in einer Weiterbildung vorgesehen, dass die geometrischen und/oder gestalterischen Daten der Leuchte und/oder deren Einhausung durch den Benutzer festgelegt werden.

Weiterhin kann es vorteilhaft sein, wenn zum Festlegen der Anforderungen an die Leuchte vom Benutzer lichttechnische Kennwerte, wie der gewünschte Lichtstrom, die gewünschte Lichtstärkeverteilung und/oder die gewünschte Lichtfarbe festgelegt werden. Dann ist es möglich, eine geeignete Leuchte rechnerisch zu ermitteln.

Die Erfindung kann auch eingesetzt werden, eine Anordnung mehrerer Leuchten zu bestimmen. Diese Leuchten können gegebenenfalls ein Leuchtensystem mit gewünschten Eigenschaften bilden. In vielen Fällen werden die Anforderungen zur Beleuchtung nicht allein von einer Leuchte erfüllt werden, sondern es ist eine Anordnung mehrerer Leuchten oder ein Leuchtensystem erforderlich. Auch für diesen Fall kann das Konzept der Erfindung genutzt werden. Es gelten analog dieselben Überlegungen wie bei der Bestimmung nur einer Leuchte. Vorzugsweise werden zur Bestimmung der Anordnung mehrerer Leuchten oder auch nur genau einer Leuchte Informationen über eine zu beleuchtende Räumlichkeit genutzt. Zu diesen Informationen gehören insbesondere die Größe der Räumlichkeit und deren gewünschte Beleuchtung.

Es gibt Fälle, bei denen die ausgewählte Leuchte zu schwer für eine Befestigung und / oder nicht selbsttragend ist. Daher ist es sinnvoll, zu überprüfen, ob eine statisch zulässige Befestigung und/oder Montage der Leuchten möglich ist und/oder die Leuchte statisch selbsttragend ist und/oder statisch bedingte Formänderungen wie Durchbiegung im Rahmen vorgegebener Toleranzen liegen. Gegebenenfalls wäre eine Modifikation der Leuchte erforderlich.

Weiterhin kann vorgesehen werden, dass die ermittelte Leuchte dahingehend überprüft wird, ob Randbedingungen hinsichtlich thermischer Belastungen und/oder elektrischer Stromversorgung eingehalten werden. So ist beispielhaft bei LED Leuchten für eine ausreichende Wärmeableitung der im Halbleiter der LED entstehenden Wärme zu sorgen, um eine Schädigung oder Zerstörung des Bauteils durch Überhitzung zu vermeiden. Ebenso ist die Stromversorgung der Bauteile zu sichern. So kann dies je nach Komplexität (Art) der Anordnung beispielsweise von LEDs auf einer Leiterplatte, ein automatisches Programm zur Festlegung von Leiterbahnnetzwerken ("Autorouter") sicherstellen.

Es kann vorteilhaft sein, dem Benutzer (ergänzend zu den von ihm selbst vorgegebenen Anforderungen) technische Kennwerte, insbesondere die installierte Leistung und Blendungsbewertungskennzahlen der ermittelten Leuchte auszugeben. Dann kann der Benutzer gegebenenfalls Änderungen der Anforderungen vornehmen, etwa wenn die installierte Leistung zu einem unerwünscht hohen Verbrauch führt.

Es gibt zwar eine Vielzahl von möglichen Vorrichtungen, die mit dem erstellbaren Datensatz gesteuert werden können. Allerdings ist es häufig vorteilhaft zu berücksichtigen, welche bestimmte Vorrichtung bei einem in Frage kommenden Hersteller nicht verfügbarer Komponenten tatsächlich zur Verfügung steht. Auf diese bestimmte Vorrichtung oder eine Anordnung mit mehreren bestimmten Vorrichtungen ist bei der Sicherstellung der Erstellbarkeit eines Datensatzes abzustellen. Sind beispielsweise Bohrungen vorgesehen, ist zu überprüfen, ob diese Bohrungen mit dem beim Hersteller vorhandenen Bohrautomaten erzeugt werden können.

Wie dargelegt ist es mit der erfindungsgemäßen Konzeption zur Herstellung von Leuchten stets möglich, dass ein Datensatz erstellt wird, mit dem eine Vorrichtung zur Herstellung der nicht verfügbaren Komponenten gesteuert werden kann.

Die Herstellung der nicht verfügbaren Komponenten der Leuchte kann sodann mit dem erstellten Datensatz mit der rechnergestützt betriebenen Vorrichtung, etwa einem Fräsautomaten, erfolgen.

In einer bevorzugten Ausführungsform wird eine plattenförmige Leuchte bereitgestellt. Bei den Lampen der Leuchte handelt es sich bevorzugt um LEDs ggf. mit Sekundäroptik oder OLEDs. Die elektrischen Komponenten und Lampen können in ein Leiterplattenmodul eingebaut werden, welches mit einer Leuchtenplattform verbunden ist. Die Leuchtenplattform dient der statischen Ausbildung der Leuchte und bei entsprechender Ausbildung der Entblendung und Lichtlenkung.

In vielen Fällen wird die Kommunikation des Benutzers mit dem Rechner zumindest teilweise internetbasiert erfolgen. Damit kann ein sehr leistungsfähiges Programm, welches der Benutzer nicht auf seinem eigenen Rechner installiert hat, eingesetzt werden. Es versteht sich, dass es in vielen Fällen auch möglich ist, Teile der Anwendungen auf einem eigenen Rechner des Benutzers ablaufen zu lassen und ein anderer Teil der Anwendung internetbasiert auf einem anderen Rechner erfolgt.

Es ist möglich, das entsprechende Computerprogrammprodukt zur Durchführung des oben geschilderten Verfahrens auf einem Datenträger zu speichern und zu vertreiben. Zur Durchführung des Verfahrens kann ein Rechner entsprechend ausgebildet sein.

### Beispiel

Die Erfindung wird nachfolgend anhand der Figuren näher beschrieben. Dabei zeigen
Fig. 1 eine Produktarchitektur aus Leuchtenplattform, an dem ein Leiterplattenmodul mit LEDs (ggf. mit Sekundäroptik) befestigt ist, sowie schematisch das aus der Leuchte austretende Licht
Fig. 2 die gewünschte rechteckige Leuchtenform mit einem innenliegenden, kleinerem rechteckigen freibleibenden Bereich
Fig. 3 die Lichtstärkeverteilung einer LED
Fig. 4 die mit den LEDs bestückte Leuchte
Fig. 5 schematisch die Überlagerung der Lichtkegel der LEDs im Nahfeld
Fig. 6 schematisch die sich ergebende Lichtstärkeverteilung der Leuchte im Fernfeld
Fig. 7 das Ablaufschema zur Auswahl, Bestimmung und Freigabe der Leuchte

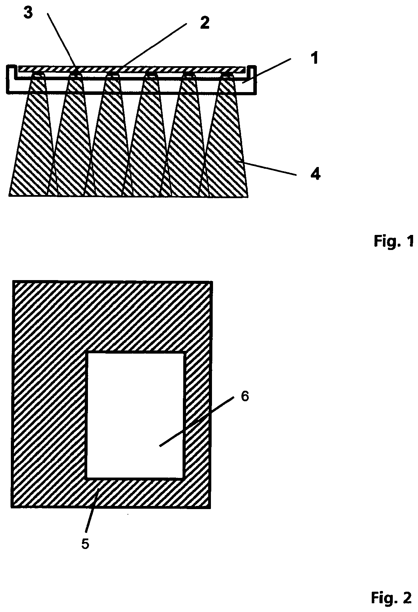

Das folgende Beispiel erläutert eine Anwendung des Verfahrens auf Grundlage einer in Figur 1 dargestellten exemplarischen Produktarchitektur für eine Leuchte aus den Komponenten: Leuchtmittel, Leuchtenplattform und Leiterplatte. Dabei ist die Leuchtenplattform 1 zu erkennen, in die das Leiterplattenmodul 2 mit den LEDs 3 eingebaut ist. Die Leuchtenplattform ist aus einer lichtdurchlässigen Platte zur Entblendung und Lichtlenkung gebildet. Es ergeben sich somit die schematisch gezeigten Lichtkegel des austretenden Lichts 4.

In Figur 2 ist die vom Lichtplaner gewünschte Leuchtenform gezeigt. Dabei handelt es sich um eine rechteckige Leuchte 5, welche eine innen liegende rechteckige Aussparung 6 aufweist.

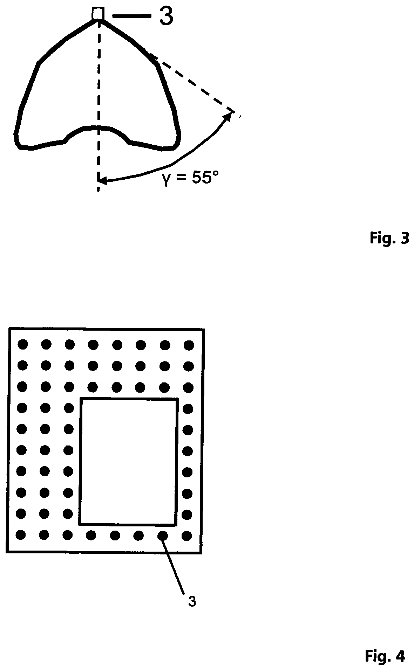

Die in Fig. 3 gezeigte Lichtstärkeverteilung einer LED 3 weist einen Grenzausstrahlwinkel von 55°, exemplarisch in der C0°-C180° Ebene gezeigt, auf.

Figur 4 unterscheidet sich von Figur 2 dadurch, dass die eingebauten Leuchtmittel, also die LEDs 3, dargestellt durch die dicken Punkte, angegeben sind.

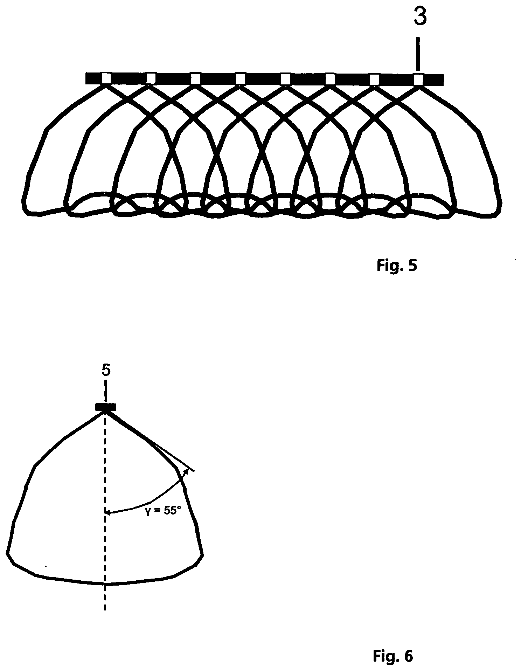

Figur 5 ist eine seitliche Schnittdarstellung der Leuchte nach Figur 4. Erkennbar sind schematisch die jeweiligen Lichtstärkeverteilungen der in einer Reihe angeordneten LEDs 3.

Figur 6 ist eine Darstellung der Leuchte mit der schematischen Lichtstärkeverteilung im Fernfeld, die sich aus der Überlagerung der jeweiligen Lichtstärkeverteilungen der nach Figur 4 angeordneten LEDs ergibt.

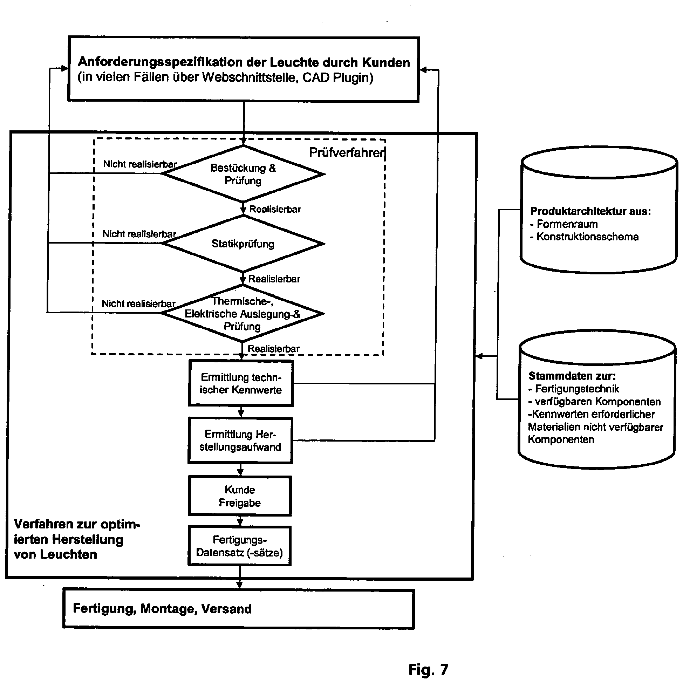

Aus der ausführlich beschrifteten Figur 7 geht der Gesamtrahmen des Ablaufs selbsterklärend hervor. Im Folgenden wird der Ablauf anhand einer bestimmten Produktarchitektur beschrieben.

### 1. Festlegung der Anforderungen durch den Benutzer, in vielen Fällen durch den Lichtplaner

Der Lichtplaner gibt zunächst gemäß der ausgewählten vordefinierten Produktarchitektur die gewünschte Leuchtenform mit der Fläche A = 0,4 m² gemäß Figur 2 vor. Zudem wird der gewünschte Lichtstrom der Leuchte von φ_{Leuchte} = 5600 Im angegeben. Als Abstrahlcharakteristik wird ein Grenzausstrahlwinkel von γ = 55° gemäß Figur 3 festgelegt. Als Lichtfarbe wird tageslichtweiß vorgegeben. Die Vorgabe der Anforderungen kann z.B. über eine webbasierte Eingabemaske erfolgen.

### 2. Rechnerbasierte Bestimmung einer die Anforderungen erfüllenden Leuchte aus verfügbaren und bisher nicht verfügbaren Komponenten

### 2.1 Bestimmung verfügbarer Komponenten

Hier erfolgt zunächst eine Auswahl verfügbarer Lampen- und Optikkomponenten, z.B. LED mit Sekundäroptik bekannter Abmessungen und bekannter Lichtstärkeverteilung mit dem Lichtstrom φ_{LED} = 100 Im aus einer Leuchtmitteldatenbank. Sodann erfolgt die Bestimmung der erforderlichen Anzahl n an Lampen- und Optikkomponenten aus dem spezifizierten Lichtstrom φ_{Leuchte} : n = ┌φ_{Leuchte} / φ_{LED}┐ = ┌5600 Im/100 Im 1 = 56. Entsprechend wird aus bestehenden Komponenten das elektrische Betriebsgerät, eine ausreichend dimensionierte Konstantstromquelle, ausgewählt.

### 2.2 Bestimmung nicht verfügbarer Komponenten

Die Leuchtenplattform sowie die Leiterplatte sind nach Datenbankabgleich nicht verfügbar und sind daher individuell für die Leuchte nach Benutzervorgabe zu erstellen.

### 3. Konstruktion der nicht verfügbaren Komponenten und Erstellung der zugehörigen Datensätze

### 3.1 Prüfung unter zugrunde liegenden Fertigungsmöglichkeiten

Die im folgenden beschriebenen Schritte 3.2. bis 3.4 erfolgen unter jeweiliger Prüfung der Produktarchitektur und der Fertigungsmöglichkeiten der eingesetzten Maschinen wie Fräs-, Bohr- und Bestückungsautomaten. Kann eine eingesetzte Maschine z.B. Leuchtenplattformen nur bis zu einer bestimmten Größe bearbeiten, wird dies in den im Folgenden beschriebenen Prüfverfahren berücksichtigt.

Ist eine die vom Benutzer gestellten Anforderungen erfüllende und verwirklichbare Leuchte gefunden, wird untersucht, ob zur Herstellung der nicht verfügbaren Komponenten ein Datensatz erstellt werden kann, mit dem eine Vorrichtung zur Herstellung der nicht verfügbaren Komponenten gesteuert werden kann. Bei der in diesem Beispiel vorgestellten Leuchte sind die nicht verfügbaren Komponenten im Regelfall die Leuchtenplattform und die Leiterplatine, also die flächige Aufnahme für die Vielzahl an LEDs. Es ist also zu prüfen, ob Datensätze zur Herstellung der Leuchtenplattform und der Leiterplatine erstellbar sind. Diese Prüfung erfolgt auch abhängig von den zur Verfügung stehenden Schneide-, Fräs- Bohr,- Belichtungs- und Bestückungsautomaten.

### 3.2 Geometrische Konstruktion und Bestückung

Es erfolgt eine rechnerbasierte, automatische, geometrische Positionierung der Lampen in diesem Fall der LEDs und Optikkomponenten in der vom Benutzer vorgegebenen Fläche der Leuchte. In vielen Fällen erfolgt eine Gleichverteilung. Im vorliegenden Beispiel ergibt sich demgemäß eine Anordnung nach Figur 4.

Hierbei wird geprüft ob die Fläche A ausreichend groß ist. Falls die Prüfung negativ verläuft, erfolgt eine Rückmeldung an den Benutzer, um die Anforderungen anzupassen. Dabei wird dem Benutzer der Hinweis gegeben, welche Änderungen der Anforderungen zu einer verwirklichbaren Leuchte führen.

### 3.3 Statik

Anhand der geometrischen Eigenschaften und der Materialeigenschaften sowie der Anforderungen an die Mindeststabilität werden statische Belastungen an den Befestigungspunkten der Leuchte ermittelt. Die Befestigungspunkte können rechnerisch ermittelt werden oder zumindest teilweise vom Benutzer vorgegeben werden. Die Mindeststabilität wird wesentlich von der geforderten Bruchsicherheit der Leuchte beeinflusst. Des Weiteren sind die Anforderungen an die vom Benutzer akzeptierte Durchbiegung zu beachten. Zur rechnerischen Bestimmung dienen Verfahren wie Finite-Elemente-Verfahren zur Lösung statischer Probleme. Die so ermittelten statischen Kennwerte werden mit den zulässigen Vorgaben und Anforderungen verglichen. Falls die Prüfung negativ verläuft, erfolgt eine Rückmeldung an den Benutzer um die Anforderungen anzupassen. Dabei wird dem Benutzer der Hinweis gegeben, welche Änderungen der Anforderungen zu einer verwirklichbaren Leuchte führen.

### 3.4 Thermische und elektrische Prüfung / Auslegung

Es erfolgt eine rechnerbasierte, automatische Dimensionierung der Leiterplatte zur Stromversorgung über die ausgewählte(n) Konstantstromquelle(n) (Konverter) und zum Thermomanagement der 56 LEDs. Darauf erfolgt eine rechnerbasierte Prüfung des Datensatzes der Leiterplatte hinsichtlich elektrischer Funktionstüchtigkeit und Sicherheit und Thermomanagement. Falls die Prüfung negativ verläuft, erfolgt eine Rückmeldung an den Benutzer um die Anforderungen anzupassen. Dabei wird dem Benutzer der Hinweis gegeben, welche Änderungen der Anforderungen zu einer verwirklichbaren Leuchte führen können. Dies kann beispielsweise der Hinweis sein, dass die Fläche der Leuchte größer sein muss, um die die erforderlichen Leiterbahnen unterzubringen.

### 4. Kennwertermittlung

Anschließend erfolgt die Errechnung planungsrelevanter technischer Kennwerte. Dies umfasst die genaue Lichtstärkeverteilung der Leuchte im Fernfeld gemäß Figur 5 und Figur 6, die Bewertung der Entblendung der Leuchte - in vielen Fällen durch das UGR - Verfahren (UGR: Unified Glare Rating), die Ermittlung der elektrischen Anschlussleistung und die Bestimmung des Herstellungsaufwands. Für weitergehende planerische Nutzung wie z.B. in Lichtsimulationsprogrammen werden die technischen Kennwerte in Dateien nach Standardformaten wie Eulumdat und IES Format zusammengefasst. Es erfolgt eine Rückmeldung der Kennwerte an den Benutzer zur Prüfung. Falls die Prüfung negativ verläuft, hat der Benutzer die Möglichkeit, die Anforderungen zur Produktarchitektur, zur Geometrie, zum gewünschten Lichtstrom der Leuchte, zur Abstrahlcharakteristik und zur Lichtfarbe anzupassen. Ansonsten wird die Leuchte zur Produktion freigegeben.

### 5. Datensätze für Ansteuerung von Vorrichtungen zur Herstellung nicht verfügbarer Komponenten

Im nächsten Schritt erfolgt die rechnerbasierte Bestimmung eines Datensatzes für die Ansteuerung einer Vorrichtung zur Herstellung der Leuchtenplattform. Im konkreten Beispiel wird also ein Schneide, Fräs- und Bohrplan für den Schnitt der Leuchte und für die Befestigung des Leuchtplattenmoduls erstellt. Ferner erfolgt eine entsprechende automatische rechnerbasierte Bestimmung eines Datensatzes für die Ansteuerung einer Vorrichtung zur Herstellung der erforderlichen individuellen bisher nicht verfügbaren Leiterplatten, auf welche die LEDs aufgebracht werden. Dabei wird auch das erforderliche Thermomanagement beachtet, das heißt, es wird darauf geachtet, dass auftretende Wärme durch Wärmeleitung und Strahlung hinreichend abgeleitet wird, so dass keine Überhitzung der Bauteile auftritt. Des Weiteren wird ein Bestückungsplan erstellt für die LEDs und Optikkomponenten zur Bestückung der Leiterplatte mit einem Bestückungsautomaten.

### 6. Fertigung

Nach der Fertigungsfreigabe werden gemäß der Datensätze der kundenindividuellen Komponenten diese bisher nicht verfügbaren Komponenten (hier Leuchtenträgerplattform und Leiterplatte) auf entsprechenden Vorrichtungen gefertigt. Sämtliche verfügbaren und individuell herstellbaren Komponenten werden zur kundenindividuellen Leuchte montiert. Die Leuchte wird an den Benutzer versandt.

### Bezugszeichenliste

- 1: Leuchtenplattform
- 2: Leiterplattenmodul
- 3: LEDs
- 4: Austretendes Licht
- 5: Rechteckige Leuchte
- 6: Aussparung

## Patentansprüche

1. Verfahren zur Erstellung eines Datensatzes zur Herstellung einer Leuchte aufweisend die nachfolgenden Schritte:
Festlegen von lichttechnischen, statischen und elektrischen Anforderungen sowie von mindestens einer Anforderung aus geometrischen und gestalterischen Anforderungen an eine Leuchte und /oder deren Einhausung durch einen Benutzer, wobei zum Festlegen der Anforderungen an die Leuchte vom Benutzer der gewünschte Lichtstrom und/oder die gewünschte Lichtstärkeverteilung und/oder die gewünschte Lichtfarbe festgelegt werden;
Rechnerbasierte Bestimmung einer die Anforderungen erfüllenden Leuchte und rechnerbasierte Bestimmung hierfür notwendiger verfügbarer und nicht verfügbarer Komponenten anhand von Daten über verfügbare Komponenten, wobei die Leuchte nicht verfügbare Komponenten aufweist, wobei bei der rechnerbasierten Bestimmung der verfügbaren und nicht verfügbaren Komponenten überprüft wird, ob die nicht verfügbaren Komponenten automatisch mittels verfügbarer Fertigungsmöglichkeiten herstellbar sind;
**dadurch gekennzeichnet, dass** falls die nicht verfügbaren Komponenten nicht herstellbar sind, ein Hinweis an den Benutzer ausgegeben wird welche Änderungen zu einer Leuchte führen, die aus verfügbaren und/oder herstellbaren Komponenten montiert werden kann,
und falls die nicht verfügbaren Komponenten herstellbar sind eine Bestimmung des Herstellungsaufwands erfolgt,
wobei dem Benutzer mit technischen Überlegungen zur Herstellung der nicht verfügbaren Komponenten der Herstellungsaufwand der Leuchte angegeben wird, und wobei bei Einverständnis des Benutzers ein Datensatz erstellt wird, mit dem mindestens eine Vorrichtung zur Herstellung der nicht verfügbaren Komponenten gesteuert werden kann.

2. Verfahren nach Anspruch 1, **dadurch gekennzeichnet, dass** vom Benutzer Anforderungen verändert werden können, insbesondere wenn kein Datensatz erstellbar ist.

3. Verfahren nach einem der Ansprüche 1 oder 2, **dadurch gekennzeichnet, dass** bei der rechnerbasierten Bestimmung eine Mehrzahl möglicher Leuchten, welche die vom Benutzer festgelegten Anforderungen erfüllen, ermittelt wird.

4. Verfahren nach einem der vorhergehenden Ansprüche, **dadurch gekennzeichnet, dass** eine Leuchte oder eine Anordnung mehrerer Leuchten, vorzugsweise aus Informationen über eine zu beleuchtende Räumlichkeit, bestimmt wird.

5. Verfahren nach einem der vorhergehenden Ansprüche, **dadurch gekennzeichnet, dass** die rechnerisch bestimmte Leuchte dahingehend überprüft wird, ob eine statisch zulässige Befestigung und/oder Montage der Leuchte möglich ist und/oder die Leuchte statisch selbsttragend ist und/oder statisch bedingte Formänderungen wie Durchbiegung im Rahmen vorgegebener Toleranzen liegen.

6. Verfahren nach einem der vorhergehenden Ansprüche, **dadurch gekennzeichnet, dass** die rechnerisch bestimmte Leuchte dahingehend überprüft wird, ob Randbedingen thermischer Belastungen und/oder elektrischer Leistungsaufnahmen eingehalten werden.

7. Verfahren nach einem der vorhergehenden Ansprüche, **dadurch gekennzeichnet, dass** dem Benutzer technische Kennwerte, insbesondere die installierte Leistung und/oder Blendungsbewertungskennzahlen der Leuchte angegeben werden.

8. Verfahren nach einem der vorhergehenden Ansprüche, **dadurch gekennzeichnet, dass** die Sicherstellung der Erstellbarkeit eines Datensatzes im Hinblick auf mindestens eine bestimmte Vorrichtung erfolgt.

9. Verfahren nach einem der vorhergehenden Ansprüche, **dadurch gekennzeichnet, dass** ein Datensatz erstellt wird, mit dem eine Vorrichtung zur Herstellung der nicht verfügbaren Komponenten gesteuert werden kann.

10. Verfahren nach einem der vorhergehenden Ansprüche, **dadurch gekennzeichnet, dass** eine plattenförmige Leuchte bereitgestellt wird, wobei insbesondere zur Aufnahme von elektrischen Komponenten und von Lampen eine Leuchtenplattform vorgesehen ist, die mit einem Leiterplattenmodul verbunden wird.

11. Datenträger enthaltend ein Computerprogrammprodukt zur Durchführung des Verfahrens nach einem der vorhergehenden Ansprüche.

12. Rechner zur Durchführung des Verfahrens nach einem der Ansprüche 1 bis 10.

## Claims

1. Method for creating a data set for producing a light having the following steps:
stipulation of lighting, static and electrical requirements and of at least one requirement from geometrical and design requirements for a light and/or its enclosure by a user, wherein, in order to stipulate the requirements for the light, the desired luminous flux and/or the desired luminous intensity distribution and/or the desired light colour are stipulated by the user;
computer-based determination of a light that meets the requirements and computer-based determination of available and unavailable components required therefor on the basis of data on available components, wherein the light has unavailable components, wherein, in the computer-based determination of the available and unavailable components, it is checked whether the unavailable components can be produced automatically by means of available manufacturing capabilities;
**characterized in that**, in the event that the unavailable components cannot be produced, an indication of which changes would result in a light which can be assembled from available and/or producible components is issued to the user,
and, in the event that the unavailable components can be produced, the production outlay is determined,
wherein the production outlay of the light is indicated to the user with technical considerations for producing the unavailable components, and wherein, once approved by the user, a data set with which at least one device for producing the unavailable components can be controlled is created.

2. Method according to Claim 1, **characterized in that** requirements can be changed by the user, in particular if no data set can be created.

3. Method according to either of Claims 1 and 2, **characterized in that**, in the computer-based determination, a plurality of possible lights which meet the requirements stipulated by the user are ascertained.

4. Method according to one of the preceding claims, **characterized in that** a light or an arrangement of a plurality of lights is determined, preferably from information about a room that is to be illuminated.

5. Method according to one of the preceding claims, **characterized in that** the computationally determined light is checked to see whether statically permissible fixing and/or assembly of the light is possible and/or the light is statically self-supporting and/or statically induced changes in shape such as bending lie within the range of predefined tolerances.

6. Method according to one of the preceding claims, **characterized in that** the computationally determined light is checked to see whether boundary conditions for thermal loading and/or electrical power consumption are satisfied.

7. Method according to one of the preceding claims, **characterized in that** technical characteristic values, in particular the installed power and/or glare evaluation characteristics of the light, are indicated to the user.

8. Method according to one of the preceding claims, **characterized in that** the ability to create a data set with regard to at least one determined device is ensured.

9. Method according to one of the preceding claims, **characterized in that** a data set with which a device for producing the unavailable components can be controlled is created.

10. Method according to one of the preceding claims, **characterized in that** a panel-shaped light is provided, wherein, in particular for receiving electrical components and lamps, a light platform which is connected to a circuit board module is provided.

11. Data carrier containing a computer program product for carrying out the method according to one of the preceding claims.

12. Computer for carrying out the method according to one of Claims 1 to 10.

## Revendications

1. Procédé permettant de créer un enregistrement de données pour la fabrication d'un luminaire, présentant les étapes suivantes consistant à :
définir des exigences de technique d'éclairage, statiques et électriques ainsi qu'au moins une exigence parmi des exigences géométriques et de conception pour un luminaire et/ou son enceinte par un utilisateur, dans lequel, pour définir les exigences pour le luminaire par l'utilisateur, le flux lumineux souhaité et/ou la distribution d'intensité de lumière souhaitée et/ou la couleur de lumière souhaitée sont définis ;
déterminer par ordinateur un luminaire répondant aux exigences, et déterminer par ordinateur des composants nécessaires à celui-ci, disponibles et non disponibles, à l'aide de données concernant des composants disponibles, le luminaire présentant des composants non disponibles, dans lequel, lors de la détermination par ordinateur des composants disponibles et non disponibles, on vérifie si les composants non disponibles peuvent être fabriqués automatiquement au moyen des capacités de fabrication disponibles ;
**caractérisé en ce que**, si les composants non disponibles ne peuvent pas être fabriqués, une indication est fournie à l'utilisateur concernant les modifications qui conduisent à un luminaire qui peut être assemblé à partir de composants disponibles et/ou pouvant être fabriqués,
et si les composants non disponibles peuvent être fabriqués, une détermination des coûts de fabrication est effectuée,
dans lequel on indique à l'utilisateur les coûts de fabrication du luminaire à l'aide de considérations techniques concernant la fabrication des composants non disponibles, et dans lequel, si l'utilisateur est d'accord, un enregistrement de données est crée qui permet de commander au moins un dispositif pour la fabrication des composants non disponibles.

2. Procédé selon la revendication 1, **caractérisé en ce que** l'utilisateur peut modifier des exigences, en particulier quand aucun enregistrement de données ne peut être créé.

3. Procédé selon l'une des revendications 1 ou 2, **caractérisé en ce que** lors de la détermination par ordinateur, une pluralité de luminaires possibles qui répondent aux exigences définies par l'utilisateur est établie.

4. Procédé selon l'une quelconque des revendications précédentes, **caractérisé en ce qu'**un luminaire ou un agencement de plusieurs luminaires est déterminé de préférence à partir d'informations concernant un local à éclairer.

5. Procédé selon l'une quelconque des revendications précédentes, **caractérisé en ce que** le luminaire déterminé par calcul est vérifié pour savoir si une fixation et/ou un montage admissible(s) statiquement du luminaire est/sont possible(s) et/ou si le luminaire est statiquement autoporteur et/ou si des modifications de forme nécessaires à la statique, comme une flexion, se trouvent dans le cadre de tolérances prédéfinies.

6. Procédé selon l'une quelconque des revendications précédentes, **caractérisé en ce que** le luminaire déterminé par calcul est vérifié pour savoir si des conditions marginales de contraintes thermiques et/ou de puissances électriques absorbées sont respectées.

7. Procédé selon l'une quelconque des revendications précédentes, **caractérisé en ce que** des caractéristiques techniques, en particulier la puissance installée et/ou des indicateurs d'évaluation de l'éblouissement, du luminaire sont signalées à l'utilisateur.

8. Procédé selon l'une quelconque des revendications précédentes, **caractérisé en ce que** la possibilité de création d'un enregistrement de données est assurée en vue d'au moins un dispositif déterminé.

9. Procédé selon l'une quelconque des revendications précédentes, **caractérisé en ce qu'**un enregistrement de données est créé qui permet de commander un dispositif pour la fabrication des composants non disponibles.

10. Procédé selon l'une quelconque des revendications précédentes, **caractérisé en ce qu'**un luminaire en forme de plaque est fourni, dans lequel une plateforme de luminaire, en particulier pour recevoir des composants électriques et des lampes, est prévue qui est reliée à un module de carte à circuits imprimés.

11. Support de données, contenant un produit de programme informatique permettant d'exécuter le procédé selon l'une quelconque des revendications précédentes.

12. Ordinateur permettant d'exécuter le procédé selon l'une quelconque des revendications 1 à 10.
